Europäisches Patentamt

European Patent Office

Office européen des brevets

(19)

(11) Veröffentlichungsnummer: **0 078 977**

**A1**

(12) # EUROPÄISCHE PATENTANMELDUNG

(21) Anmeldenummer: **82109904.1**

(22) Anmeldetag: **26.10.82**

(51) Int. Cl.³: **G 01 L 7/12**

(30) Priorität: **27.10.81 DE 3142551**

(43) Veröffentlichungstag der Anmeldung:
**18.05.83  Patentblatt  83/20**

(84) Benannte Vertragsstaaten:
**BE CH DE FR IT LI NL**

(71) Anmelder: **Dostmann GmbH & Co. KG**

**D-6980 Wertheim(DE)**

(72) Erfinder: **Marterer, Karl**
**Teilbacher Mühle 5**
**D-6980 Wertheim-Waldenhausen(DE)**

(74) Vertreter: **Grupe, Peter, Dipl.-Ing.**
**Patentanwaltsbüro**
**Tiedtke-Bühling-Kinne-Grupe-Pellmann-Grams**
**Bavariaring 4**
**D-8000 München 2(DE)**

(54) Barometer.

(57) Barometer mit einer Membrankapsel (4), einer drehbar gelagerten Zeigerwelle (22) und einem Übertragungswerk, das die Bewegungen der Membrankapsel (4) zur Zeigerwelle (22) überträgt. Zum Übertragungswerk gehört eine Wandlervorrichtung (12), die eine translatorische Bewegung eines Eingangselementes (16), das nur verschiebbar ist, in eine rotatorische Bewegung eines Ausgangselementes (46) umwandelt, das gegen eine Verschiebung gesichert ist und drehbar gelagert ist. Die Wandlervorrichtung (12), die zwischen dem Eingangselement (16) und dem Ausgangselement (46) beispielsweise schräggestellte Stäbe (54, 56), einen verdrillten, vorgespannten Strang oder eine Gewindehülse mit zugehörigem Gewindestift aufweist, ersetzt ganz oder teilweise die Hebelmechanismen herkömmlicher Barometer.

FIG.2

BAROMETER

Die Erfindung bezieht sich auf ein Barometer mit einer Membrankapsel, einer drehbar gelagerten Zeigerwelle und einem Übertragungswerk, das einerseits mit der Zeigerwelle und andererseits mit der Membrankapsel derart gekoppelt ist, daß es die Bewegungen der Membrankapsel zur Zeigerwelle überträgt.

Ein solches Barometer, das auch als Aneroidbarometer bezeichnet wird, ist in zahlreichen verschiedenen Ausführungsformen bekannt. Die Membrankapsel des bekannten Barometers besteht aus zwei am Rand gasdicht verbundenen Metallmembranen und ist weitgehend evakuiert. Durch geeignete Vorspannung der Metallmembranen ist dafür gesorgt, daß diese durch den umgebenden Luftdruck nicht in Anlage aneinandergedrückt werden, sondern je nach der Höhe des Luftdruckes mehr oder weniger großen Abstand voneinander haben. Eine solche Membrankapsel wird als stabilisierte Membrankapsel bezeichnet im Gegensatz zu ebenfalls bekannten, nicht stabilisierten Membrankapseln, bei denen die Metallmembranen von einer zusätzlichen Stützfeder auseinandergezogen werden. Da eine Seite der Membrankapsel gerätefest angeordnet ist, führt die Metallmembran auf der anderen Seite der Membrankapsel bei einer Luftdruckänderung eine entsprechende Bewegung aus. Diese Bewegung bzw. Auslenkung wird mittels des Übertragungswerkes zu einem Zeiger auf der Zeigerwelle übertragen, dessen Stellung über einem Ziffernblatt ablesbar ist. Das Übertragungswerk muß die kleinen Auslenkungen der Membrankapsel in einen großen Zeigerweg umwandeln und hat zu diesem Zweck ein großes Übersetzungsverhältnis. Die Übertragungswerke bekannter Barometer umfassen in der Regel mehrere Hebel, die als einarmige Hebel, zweiarmige Hebel oder Winkelhebel ausgebildet sind, sowie als Kette, Faden oder Zahnsegment ausgebildete Elemente, die schließlich die Bewegungen vom Hebelmechanismus zur Zeigerwelle übertragen. Diese Übertragungswerke der bekannten Barometer bestehen somit aus verhältnismäßig vielen Teilen, aufgrund derer der Herstellungs- und Montageaufwand groß ist.

Der Erfindung liegt die Aufgabe zugrunde, das gattungsgemäße Barometer derart auszubilden, daß seine Teilezahl möglichst gering ist. Diese Aufgabe wird erfindungsgemäß dadurch gelöst, daß das Übertragungswerk eine Wandlervorrichtung aufweist, die ein drehbar gelagertes Ausgangselement, das in zumindest einer Richtung gegen axiale Verschiebung gesichert ist, und ein in Richtung der Drehachse des Ausgangselementes verschiebbar geführtes Eingangselement umfaßt, das gegen Drehung um die Drehachse des Ausgangselementes gesichert ist, und die eine translatorische Bewegung des Eingangselementes in eine rotatorische Bewegung des Ausgangselementes umwandelt, wobei die Membrankapsel das Eingangselement verschiebt und das Ausgangselement die Zeigerwelle antreibt.

Wesentlicher Bestandteil des Übertragungswerkes des erfindungsgemäßen Barometers ist somit die Wandlervorrichtung, die eine translatorische Bewegung in eine rotatorische Bewegung umwandelt. Eine solche Wandlervorrichtung kann mit einfachen konstruktiven Mitteln realisiert werden und ersetzt beim erfindungsgemäßen Barometer die komplizierten Hebelmechanismen und dergleichen, die bei herkömmlichen Barometern das Übertragungswerk bilden.

In vorteilhafter Ausbildung der Erfindung kann vorgesehen sein, daß das Übertragungswerk ausschließlich aus der Wandlervorrichtung besteht, wobei die Zeigerwelle koaxial zum Ausgangselement angeordnet und einstückig mit diesem ausgebildet ist und wobei das Eingangselement unmittelbar an der Membrankapsel abgestützt ist. Bei dieser Ausbildung sitzt somit die Wandlervorrichtung unmittelbar auf der Membrankapsel und ist die Welle des Ausgangselementes zugleich die Zeigerwelle. Dadurch ist eine größtmögliche Vereinfachung und Reduzierung der Teilezahl erreicht, wobei sich günstig auch auswirkt, daß nicht nur die Hebel, Zugelemente, Zahnsegmente, Ritzel und dergleichen herkömmlicher Übertragungswerke sondern auch die für diese Teile benötigten Lager, Wellen, Platinen und dergleichen entfallen.

Obwohl sich die größtmögliche Vereinfachung dadurch erreichen läßt, daß das Übertragungswerk ausschließlich aus der Wandlervorrichtung besteht, lassen sich auch dann noch Vorteile durch die Erfindung erzielen, wenn der Wandlervorrichtung an sich bekannte Übertragungselemente wie Hebel, Räder,

Radsegmente, Zugelemente und dergleichen nachgeschaltet und/
oder vorgeschaltet sind.

In vorteilhafter Ausbildung der Erfindung kann vorgesehen
sein, daß die Wandlervorrichtung zumindest einen Stab umfaßt,
der an seinem einen Ende mit dem Ausgangselement und an seinem anderen Ende mit dem Eingangselement jeweils mittels eines Kugelgelenkes verbunden ist, daß die beiden Kugelgelenke
Abstand von der Drehachse des Ausgangselementes haben, daß
die Längsachse des Stabes bezüglich einer zur Drehachse
parallelen Lage schwach geneigt ist und daß das Ausgangselement gegen axiale Verschiebung in Richtung weg vom Eingangselement gesichert ist. Wenn bei dieser Wandlervorrichtung das
Eingangselement in Richtung zum Ausgangselement verschoben
wird, nimmt die Neigung des Stabes weiter zu, wobei dessen im
Ausgangselement gelagertes Ende das Ausgangselement dreht.

In weiterer vorteilhafter Ausbildung der Erfindung kann vorgesehen sein, daß die Wandlervorrichtung einen verdrillten
Strang aus einem elastischen Werkstoff umfaßt, der an seinem
einen Ende drehfest mit dem Ausgangselement und an seinem anderen Ende drehfest mit dem Eingangselement verbunden ist,
daß der Strang im wesentlichen entlang der Drehachse des
Ausgangselementes verläuft, daß das Ausgangselement gegen
axiale Verschiebung in Richtung zum Eingangselement gesichert
ist, daß am Ausgangselement ein Federmoment angreift, das
die Verdrillung des Stranges aufrechtzuhalten versucht, und
daß das Eingangselement zug- und druckfest mit der Membrankapsel bzw. mit dem zwischen die Membrankapsel und das Eingangselement geschalteten Element verbunden ist. Bei dieser
Ausbildung der Wandlervorrichtung führt eine Längenänderung
des verdrillten Stranges zu einer Änderung des vom Strang
auf das Ausgangselement ausgeübten Drehmomentes, so daß das
Ausgangselement sich in eine dem geänderten Drehmoment entsprechende Drehstellung bewegt.

Ferner kann in vorteilhafter Ausbildung der Erfindung vorgesehen sein, daß die Wandlervorrichtung ein mit schraubenlinienförmigen Führungsflächen versehenes Führungselement und ein Eingriffselement umfaßt, das mit den Führungsflächen in Eingriff stehende Eingriffsflächen aufweist, daß die Mittelachse der schraubenlinienförmigen Führungsflächen im wesentlichen mit der Drehachse des Ausgangselementes zusammenfällt, daß das Führungselement und das Eingriffselement dreh- und schiebefest mit dem Eingangselement bzw. dem Ausgangselement verbunden sind, daß das Ausgangselement in beiden Richtungen gegen axiale Verschiebung gesichert ist und daß das Eingangselement zug- und druckfest mit der Membrankapsel bzw. mit dem zwischen die Membrankapsel und das Eingangselement geschalteten Element verbunden ist. Bei dieser Ausführungsform ist eine Änderung der Relativstellung zwischen dem Eingriffselement und dem Führungselement in Axialrichtung zwangsläufig von einer Änderung der Relativstellung in Umfangs- bzw. Drehrichtung begleitet.

Weitere vorteilhafte Ausgestaltungen der Erfindung sind in den Unteransprüchen gekennzeichnet und ergeben sich aus der folgenden Beschreibung von Ausführungsbeispielen der Erfindung unter Bezugnahme auf die Zeichnungen. Es zeigen:

Figur 1        eine Seitenansicht einer ersten Ausführungsform des erfindungsgemäßen Barometers;

Figur 2        eine Schnittdarstellung einer Wandlervorrichtung, die bei dem Barometer gemäß Figur 1 Anwendung finden kann;

Figur 3        eine Schnittdarstellung einer weiteren Wandlervorrichtung, die bei dem Barometer gemäß Figur 1 Anwendung finden kann;

Figur 4    eine wiederum andere Wandlervorrichtung,
die bei dem Barometer gemäß Figur 1 Anwendung finden kann;

Figur 5    eine zweite Ausführungsform des Barometers;
und

Figur 6    eine dritte Ausführungsform des Barometers.

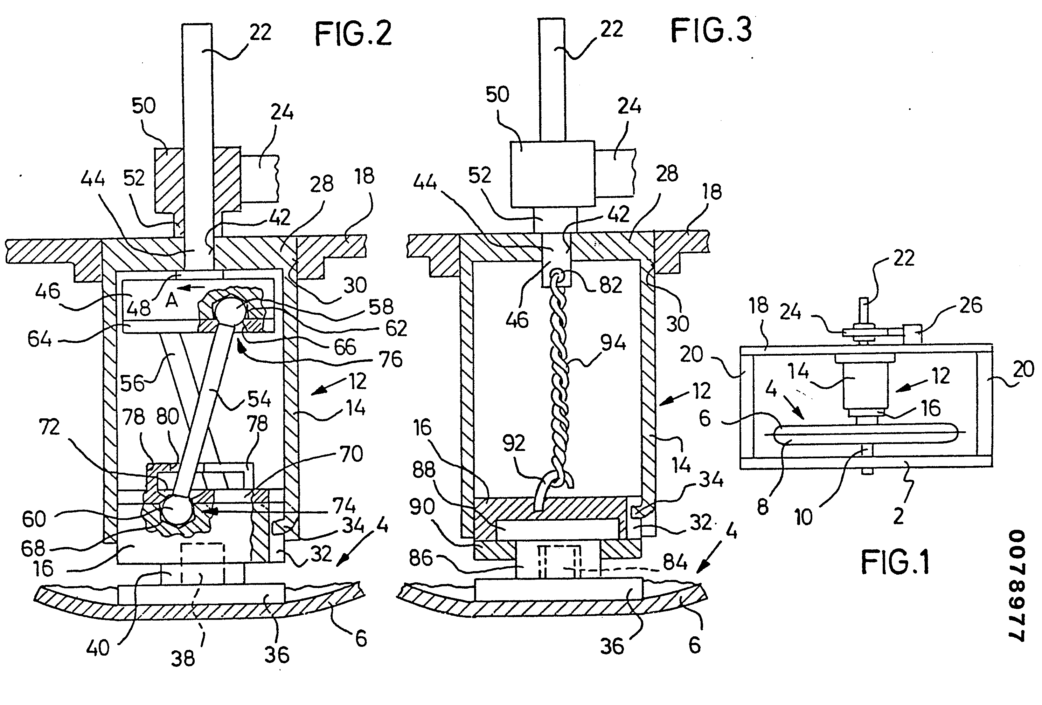

Figur 1 zeigt ein Barometer in Seitenansicht, wobei allerdings dessen Gehäuse, Sichtscheibe, Ziffernblatt und Zeiger zur Vereinfachung der Darstellung und der Erläuterung weggelassen sind.

Das dargestellte Barometer umfaßt eine im wesentlichen kreisförmige Platine bzw. Grundplatte 2, die eine Membrankapsel 4 trägt. Die Membrankapsel 4 besteht aus einer in Figur 1 oberen Metallmembran 6 sowie einer unteren Metallmembran 8, die an ihrem Rand luftdicht miteinander verbunden sind, und ist weitgehend evakuiert. Die beiden Metallmembranen 6 und 8 haben eine solche Vorspannung, daß die Membrankapsel zu ihrer Stabilisierung keine Stützfeder benötigt, d.h. stabilisiert ist. An der unteren Metallmembran 8 ist in deren Mitte ein Gewindezapfen 10 befestigt, der in eine nicht dargestellte Gewindebohrung in der Grundplatte 2 geschraubt ist und an seinem freien Ende einen Schlitz zum Angriff eines geeigneten Werkzeuges, beispielsweise eines Schraubenziehers, aufweist. Durch Drehen des Gewindezapfens 10 in der ihm zugeordneten Gewindebohrung kann somit die Lage der Membrankapsel 4 relativ zur Grundplatte 2 eingestellt werden.

Die Membrankapsel 4 ist mittig bezüglich der Grundplatte 2 angeordnet. Auf der von der Grundplatte 2 abgewandten Seite der Membrankapsel 4 ist ebenfalls mittig eine Wandlervorrichtung 12 angeordnet, die im folgenden noch ausführlicher beschrieben werden wird. Zur Wandlervorrichtung gehören ein im wesentlichen napfförmiges, zylindrisches Gehäuse 14 sowie ein Eingangselement 16, das in Figur 1 unten aus dem Gehäuse 14 vorsteht und auf noch zu beschreibende Weise mit der oberen Metallmembran 6 verbunden ist. Das Gehäuse 14 ist an seinem in Figur 1 oberen Ende in eine im wesentlichen ebene, kreisförmige Platine 18 eingesetzt, die die Wandlervorrichtung 12 dreh- und schiebefest hält. Die Platine 18 ist mit der Grundplatte 2 über Säulen 20 fest verbunden.

Über die Platine 18 steht nach oben (in Figur 1) eine Zeigerwelle 22 vor, auf die ein nicht dargestellter Zeiger aufgesteckt werden kann. Die Zeigerwelle 22 ist einstückig mit einem noch zu beschreibenden Ausgangselement der Wandlervorrichtung 12 verbunden. An der Zeigerwelle 22 ist eine Spiralfeder 24 mit ihrem einen Ende festgelegt; das andere Ende der Spiralfeder 24 ist in einem an der Platine 18 befestigten Widerlager 26 festgelegt, so daß die Spiralfeder 24 auf die Zeigerwelle 22 ein gewisses Federmoment ausübt.

Wenn die obere Metallmembran 6 aufgrund von Änderungen des Umgebungsdruckes mehr oder weniger weit nach oben oder unten in Figur 1 ausgelenkt wird, wird diese Auslenkung unmittelbar zum Eingangselement 16 der Wandlervorrichtung 12 übertragen, das entsprechend der Auslenkung im Gehäuse 14 verschoben wird. Diese translatorische Bewegung des Eingangselementes 16 wird von der Wandlervorrichtung 12 in eine rotatorische Bewegung des nicht dargestellten Ausgangselementes der Wandlervorrichtung 12 und somit der Zeigerwelle 22 umgewandelt. Das Übertragungswerk des Barometers, das die Bewegung der Membrankapsel zur Zeigerwelle überträgt, besteht somit beim Ausführungsbeispiel gemäß Figur 1 ausschließlich aus der Wandlervorrichtung 12.

Im folgenden wird unter Bezugnahme auf Figur 12 eine erste Ausbildung der Wandlervorrichtung 12 ausführlicher erläutert. In den Figuren 1 und 2 sowie allen übrigen Figuren werden gleiche Bezugszeichen für gleiche Teile und Elemente benutzt.

In Figur 2 sind die obere Metallmembran 6, die Platine 18 und die Wandlervorrichtung 12 erkennbar. Das Gehäuse der Wandlervorrichtung hat die Form eines zylindrischen Napfes, dessen Boden 28 in Figur 2 oben liegt und bündig mit der Oberseite der Platine 18 verläuft. Das Gehäuse 14 ist in eine entsprechende Öffnung 30 in der Platine 18 eingeklemmt. In das unten liegende, offene Ende des Gehäuses 14 ist das Eingangselement 16 der Wandlervorrichtung 12 verschiebbar eingesetzt. Das Eingangselement 16 hat im wesentlichen die Form einer Scheibe mit einer zylindrischen Mantelfläche, die derart in Berührung mit der Innenseite des Gehäuses 14 steht, daß das Eingangselement 16 vom Gehäuse in dessen Axialrichtung mit möglichst geringem Widerstand geführt wird. In die Mantelfläche des zylindrischen Eingangselementes 16 ist eine Längsnut 32 gearbeitet, in die eine vom freien Rand des Gehäuses 14 umgebogene Nase 34 ragt, so daß das Eingangselement 16 von der Längsnut 32 und der Nase 34 bei seiner Verschiebung in Axialrichtung geführt wird, jedoch an einer Drehung gehindert wird.

Mittig an der Oberseite der oberen Metallmembran 6 ist eine Platte 36 mit einem nach oben vorstehenden, angeformten Zapfen 38 befestigt. Das Eingangselement 16 liegt mit einem am Eingangselement 16 angeformten Ring 40 auf der Oberseite der Platte 36 auf und weist eine Bohrung zur Aufnahme des Zapfens 38 auf. Die Platte 36 mit ihrem Zapfen 38 ist relativ zum Eingangselement 16 drehbar. Aufgrund der vorstehend beschriebenen Ausbildung nimmt die obere Metallmembran 6 das Eingangselement 16 bei ihrer Auslenkung nach oben mit, wobei jedoch zugleich sichergestellt ist, daß die gesamte Membrankapsel 4 zum Einstellen um ihre Achse gedreht werden kann, ohne daß an dieser Drehung das Eingangselement 16 teilnimmt.

Mittig im Boden 28 des Gehäuses 14 ist eine Lagerbohrung 42 ausgebildet, in der drehbar eine Welle 44 gelagert ist, die einstückig in die koaxiale Zeigerwelle 22 übergeht. Die Welle 44 ist außerdem einstückig mit einem Ausgangselement 46 in Form einer Kreisscheibe ausgebildet, die nahe dem Boden 28 innerhalb des Gehäuses 14 angeordnet ist. Am Übergang zwischen der Welle 44 und dem Ausgangselement 46 ist eine Ringschulter 48 ausgebildet, die an der in Figur 2 unteren Seite des Bodens 28 anliegt und somit das Ausgangselement 46 gegen eine Verschiebung in Richtung seiner Drehachse nach oben (in Figur 2) sichert. Die Drehachse des Ausgangselementes 46 stimmt mit der Drehachse der Welle 44 und der Zeigerwelle 22 überein. Auf die Zeigerwelle 22 ist eine Nabe 50 geklemmt, die (in Figur 2) oberhalb des Bodens 28 angeordnet ist. An der Nabe 50 ist die Spiralfeder 24 mit ihrem einen Ende befestigt. Eine weitere Ringschulter 52 ist an der Nabe 50 auf deren dem Boden 28 zugewandter Seite angeformt. Die Ringschulter 52 liegt auf der in Figur 2 oberen Seite des Bodens 28 auf und verhindert somit, daß sich die Welle 44 und mit dieser das Ausgangselement 46 nach unten in Figur 2 bewegen können.

Aufgrund der beschriebenen Ausbildung ist somit das Ausgangselement 46 in der Wandlervorrichtung 12 um die Drehachse des Ausgangselementes 46 drehbar, jedoch in Achsrichtung nicht verschiebbar gelagert.

Wie Figur 2 erkennen läßt, sind zwischen dem Eingangselement 16 und dem Ausgangselement 46 der Wandlervorrichtung 12 zwei Stäbe 54 und 56 angeordnet, die einander gleich ausgebildet und gelagert sind, so daß die folgende Beschreibung des Stabes 54 dem Sinne nach für beide Stäbe 54 und 56 gilt.

Der Stab 54 weist an seinen beiden Enden jeweils eine angeformte Kugel 58 bzw. 60 auf. Für die Kugel 58 ist im Ausgangselement 46 eine Kugelpfanne 62 ausgebildet, die sich nahe dem Rand des scheibenförmigen Ausgangselementes 46 und auf dessen dem Eingangselement 16 zugewandter Seite befindet. Wichtig ist, daß die Kugelpfanne 62 einen gewissen Abstand von der Drehachse des Ausgangselementes 46 hat. Auf der dem Eingangselement 16 zugewandten Seite des Ausgangselementes 46 ist eine Scheibe 64 mit einer Öffnung 66 befestigt, durch die der Stab 54 verläuft, wobei der Rand der Öffnung 66 die Kugel 58 in der Kugelpfanne 62 sichert, d.h. verhindert, daß die Kugel 58 aus der Kugelpfanne 62 austreten kann. Zugleich ist jedoch sichergestellt, daß der Stab 54 in der Kugelpfanne 62 innerhalb gewisser Grenzen in beliebiger Richtung verschwenkt werden kann. Für die Kugel 60 sind im bzw. am Eingangselement 16 eine Kugelpfanne 68, eine Scheibe 70 so- wie eine Öffnung 72 vorgesehen, die gleiche Ausbildung und gleiche Funktion haben wie die Kugelpfanne 62, die Scheibe 64 und die Öffnung 66 für die Kugel 58 und daher nicht ausführlicher erläutert werden. Auch die Kugelpfanne 68 befindet sich nahe dem Rand des zylindrischen Eingangselementes 16 und in gewissem Abstand von der Drehachse des Ausgangselementes 46. Die Kugel 60 und die Kugelpfanne 68 bilden zusammen ein Kugelgelenk 74, mittels dessen der Stab 54 mit dem Eingangselement 16 verbunden ist, und die Kugel 58 bildet zusammen mit der Kugelpfanne 62 ein weiteres Kugelgelenk 76, mittels dessen der Stab 54 mit dem Ausgangselement 46 verbunden ist.

Der zweite Stab 56 ist mit Hilfe von zwei auf gleiche Weise ausgebildeten Kugelgelenken mit dem Eingangselement 16 bzw. dem Ausgangselement 46 verbunden.

An der Scheibe 70 ist für jeden der beiden Stäbe 54 und 56 eine Führung 78 angeformt, in der eine Öffnung 80 ausgebil- det ist, durch die der jeweilige Stab 54 bzw. 56 verläuft. Die Öffnung 80 ist derart geformt, daß der jeweilige Stab 54 bzw. 56 nicht in eine zur Drehachse des Ausgangselementes 46 parallele Lage kommen kann. Vielmehr sorgt jede Führung 78 dafür, daß der ihr zugeordnete Stab 54 bzw. 56 nicht über ein gewisses Maß aufgerichtet werden kann.

Die Spiralfeder 24 übt ein solches Federmoment auf die Zeigerwelle 22 aus, daß dieses das Ausgangselement 46 in Richtung A zu drehen versucht. Bei dieser Drehung würde das Ausgangselement 46 die oberen Enden der Stäbe 54 und 56 mitzunehmen versuchen, so daß das Drehmoment in Schubkräfte in den Stäben 54 und 56 umgewandelt wird, die vom Eingangselement 16 aufgenommen werden. Dadurch wird das Eingangselement 16 in Figur 2 nach unten und somit stets in Anlage an der Platte 36 gedrückt. Das Eingangselement 16 folgt somit der Auslenkung der oberen Metallmembran 6 nicht nur nach oben (in Figur 2) sondern auch nach unten. Dies könnte allerdings auch durch eine zwischen die beiden einander zugewandten Flächen des Eingangselementes 16 und des Ausgangselementes 46 gesetzte Druckfeder erreicht werden, wobei dann die Spiralfeder 24 entfallen könnte.

Wenn im Betrieb der Umgebungsdruck beispielsweise sinkt, ruft dies eine Auslenkung der oberen Metallmembran 6 nach oben in Figur 2 hervor. Bei dieser Bewegung nimmt die Metallmembran 6 das Eingangselement 16 mit, so daß in den Kugelgelenken an den unteren Enden der Stäbe 54 und 56 auf die Stäbe eine Kraft in Achsrichtung des Ausgangselementes 46 ausgeübt wird. Da jedoch die Stäbe 54 und 56 mittels der Kugelgelenke an ihren oberen Enden im Ausgangselement 46 abgestützt sind und das Ausgangselement 46 aufgrund seiner Lagerung nicht in Richtung seiner Drehachse verschoben werden kann, können die oberen Enden der Stäbe 54 und 56 keine der Verschiebung des Eingangselementes 16 entsprechende Schiebebewegung in Richtung der Drehachse ausführen. Die oberen Enden der Stäbe 54 und 56 haben lediglich die Möglichkeit, auf einer Kreis-

00789777

bahn um die Drehachse des Ausgangselementes 46 herum auszuweichen, wobei sie das Ausgangselement 46 bei dieser Drehung mitnehmen. Die Verschiebung der unteren Enden der Stäbe 54 und 56 nach oben in Figur 2 führt somit dazu, daß der Stab 54 um das Kugelgelenk 74 im Uhrzeigersinn (in Figur 2) geschwenkt wird und dadurch in eine stärker geneigte Lage kommt, während gleichzeitig der Stab 54 um sein unteres Kugelgelenk im Gegenuhrzeigersinn (in Figur 2) geschwenkt wird. Die gelenkige Verbindungen der oberen Enden der Stäbe 54 und 56 mit dem Ausgangselement 46 bewirken, daß dabei das Ausgangselement 46 um seine Drehachse gedreht wird. Bei einer gegebenen Verschiebung des Eingangselementes 16 ist dabei die bewirkte Drehung des Ausgangselementes 46 um so größer, je näher sich die Stäbe 54 zunächst an einer zur Drehachse parallelen Lage befinden. Allerdings sollen sie die zur Drehachse parallele Lage selber nicht einnehmen können, da in dieser Lage die in Längsrichtung der Stäbe 54 und 56 wirkenden Druckkräfte keine Komponente in Drehrichtung des Ausgangselementes 46 haben, so daß die Stäbe 54 und 56 die Wandlervorrichtung 12 blockieren würden. Um dem vorzubeugen, sind die Führungen 78 vorgesehen.

Bei der in Figur 3 dargestellten zweiten Ausführungsform der Wandlervorrichtung 12 sind Teile, die auch bei der Ausführungsform gemäß Figur 2 vorhanden sind, mit gleichem Bezugszeichen wie bei der Ausführungsform gemäß Figur 2 bezeichnet. Zur Vermeidung von Wiederholungen werden sie im Zusammenhang mit der Ausführungsform gemäß Figur 3 nicht erneut beschrieben.

Bei der Ausführungsform gemäß Figur 3 sind die Nabe 50 und die Ringschulter 52 einstückig mit der Zeigerwelle 22 und der Welle 44 ausgebildet. Das Ausgangselement 46 besteht lediglich aus einer axialen Verlängerung der Welle 44. Im Ausgangselement 46 ist innerhalb des Gehäuses 14 eine Bohrung 82 ausgebildet. Die Ringschulter 52 verhindert, daß das Ausgangselement 46 in Richtung seiner Drehachse zum Eingangselement 16 verschoben wird.

Statt des Zapfens 38 der Ausführungsform gemäß Figur 2 ist bei der Ausführungsform gemäß Figur 3 an der Platte 36 ein Gewindezapfen 84 angeformt. Mit diesem verschraubt ist ein zylindrisches Verbindungselement 86 mit einem flachen Kopf 88, der in einer dem Kopf angepaßten Ausnehmung im Eingangselement 16 sitzt. Am Eingangselement 16 ist ein Ring 90 befestigt, der den Kopf 88 von unten in Figur 3 hintergreift.

Das Verbindungselement 86 ist bis zum Anschlag auf die Platte 36 geschraubt. Im Eingangselement 16 und in der Bohrung des Ringes 90 ist das Verbindungselement 86 drehbar, so daß das Eingangselement 16 zug- und druckfest mit der oberen Metallmembran 6 verbunden ist, die Membrankapsel 4 jedoch relativ zum Eingangselement 16 um die Achse der Membrankapsel gedreht werden kann, ohne daß das Eingangselement 16 an dieser Drehung teilnimmt.

Mittig am Eingangselement 16 ist im Inneren des Gehäuses 14 ein Haken 92 befestigt. Zwischen dem Eingangselement 16 und dem Ausgangselement 46 ist ein verdrillter Strang 94 eingesetzt, in dessen in Figur 3 unteres Ende der Haken 92 eingehängt ist und dessen in Figur 3 oberes Ende mit dem Ausgangselement 46 mittels der Bohrung 82 drehfest verbunden ist. Auch die Verbindung zwischen dem Strang 94 und dem Eingangselement 16 ist drehfest. Der Strang 94 besteht beim dargestellten Ausführungsbeispiel aus miteinander verdrillten gummielastischen Fäden und steht unter einer gewissen Vorspannung, aufgrund derer vom Strang 94 ein gewisses Drehmoment auf das Ausgangselement 46 und somit auf die Zeigerwelle 22 ausgeübt wird. Im stationären Zustand steht dieses Drehmoment im Gleichgewicht mit dem von der Spiralfeder 24 ausgeübten Federmoment. Wenn - ausgehend von einem stationären Zustand - das Eingangselement 16 in Richtung der Drehachse des Ausgangselementes 46 verschoben wird, wird dadurch der verdrillte Strang 94 mehr oder weniger als zuvor in die Länge gezogen. Dadurch ändert sich das vom Strang 94 ausgeübte Drehmoment, so daß sich ein Momentengleichgewicht erneut erst nach einer Drehung des Ausgangselementes 46 um seine Drehachse einstellen kann. Auf diese Weise wird eine Verschiebung des Eingangselementes 16 in eine Drehung des Ausgangselementes 46 umgewandelt.

Anders als beim vorstehend beschriebenen Ausführungsbeispiel der Wandlervorrichtung 12 kann der verdrillte Strang 94 aus dünnen Metalldrähten aus Federstahl oder dergleichen bestehen.

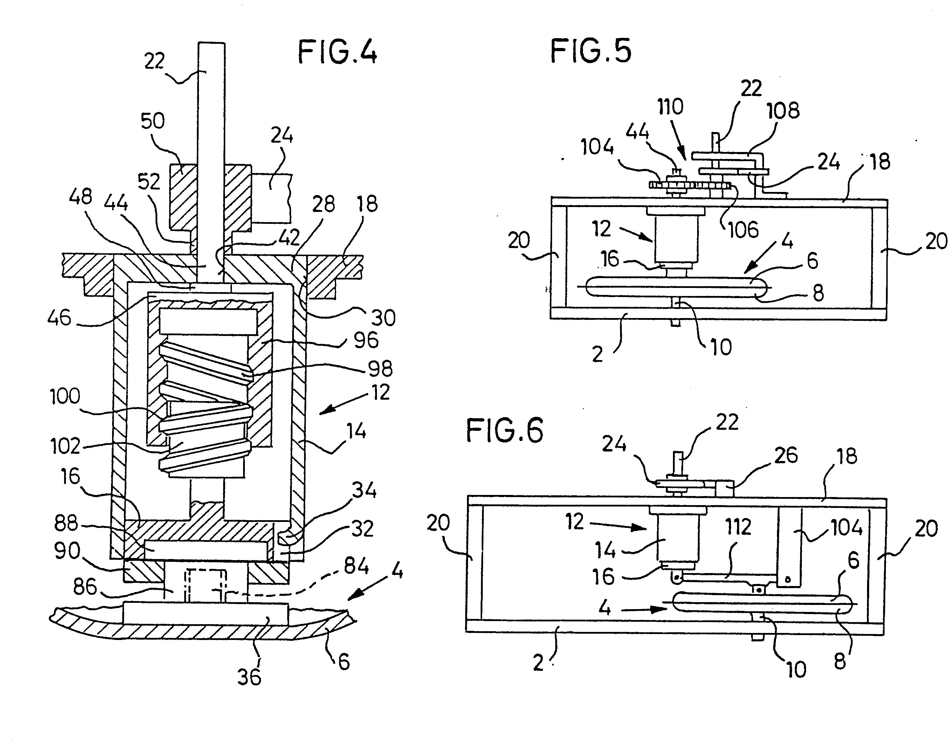

Figur 4 zeigt eine weitere Ausführungsform der Wandlervorrichtung 12, wobei wiederum für Teile, die mit Teilen der Ausführungsformen gemäß den Figuren 2 und 3 übereinstimmen, gleiche Bezugszeichen benutzt sind.

Bei der Ausführungsform gemäß Figur 4 stimmt die Ausbildung der Verbindung zwischen dem Eingangselement 16 und der Membrankapsel 4 mit der Ausbildung dieser Verbindung bei der Ausführungsform gemäß Figur 3 überein. Wie bei der Ausführungsform gemäß Figur 2 ist auch bei der Ausführungsform gemäß Figur 4 die Nabe 50 mit der Ringschulter 52 auf die Welle 44 aufgesetzt. Diese und somit das Ausgangselement 46 sind bei der Ausführungsform gemäß Figur 4 auf gleiche Weise wie bei der Ausführungsform gemäß Figur 2 im Gehäuse 14 gelagert.

Das scheiben- bzw. plattenförmige Ausgangselement 46 ist bei der Ausführungsform gemäß Figur 4 einstückig mit einer Gewindehülse 96 ausgebildet, die ein als Trapezgewinde ausgebil-

detes Innengewinde aufweist, dessen Profilflächen Eingriffsflächen 98 bilden. Diese Eingriffsflächen 98 stehen in Eingriff mit von den Profilflächen eines Außengewindes gebildeten Führungsflächen 100. Diese Führungsflächen 100 bzw. das Außengewinde sind an einem Gewindestift 102 ausgebildet, der fest mit dem Eingangselement 16 verbunden ist. Die Mittelachse des Innengewindes der Gewindehülse 96 und des Außengewindes des Gewindestiftes 102 fällt mit der Drehachse des Ausgangselementes 46 zusammen. Die Steigung der beiden Gewinde ist derart gewählt, daß bei einer Verschiebung des Gewindestiftes 102 in Richtung der Drehachse des Ausgangselementes 46 keine Selbsthemmung eintritt, sondern die Gewindehülse 96 und somit das Ausgangselement 46 eine durch die Verschiebung verursachte Drehung ausführen. Unter Beachtung dieser Forderung ist die Steigung der beiden Gewinde allerdings möglichst gering gewählt, weil die vom Ausgangselement 46 ausgeführte Drehung aufgrund einer bestimmten Verschiebung des Eingangselementes 16 um so größer ist, je kleiner die Steigung ist.

Bei der Ausführungsform gemäß Figur 4 ist die Spiralfeder 24 nicht unbedingt erforderlich; sie ist jedoch zweckmäßig, damit in der Wandlervorrichtung 12 auftretendes Spiel ausgeglichen wird.

Aus der vorstehenden Beschreibung der Ausführungsform gemäß Figur 4 ergibt sich ohne weiteres, daß dann, wenn die Metallmembran 6 nach oben oder unten in Figur 4 ausgelenkt wird, der Gewindestift 102, der ein Führungselement bildet, nach oben bzw. unten verschoben wird und dadurch die Gewindehülse 96, die ein Eingriffselement bildet, zu einer Drehung um die Drehachse des Ausgangselementes 46 zwingt, so daß die in Figur 4 gezeigte Wandlervorrichtung 12 die gewünschte Umwandlung einer translatorischen Bewegung in eine rotatorische Bewegung ausführt.

Bei der Ausführungsform des Barometers gemäß Figur 1 besteht das Übertragungswerk, das die Bewegung der Membrankapsel 4 zur Zeigerwelle 22 überträgt, ausschließlich aus der Wandlervorrichtung 12, die beispielsweise gemäß einer der Figuren 2 bis 4 ausgebildet sein kann. Das Übertragungswerk kann jedoch auch zusätzliche Elemente aufweisen, wie die Ausführungsbeispiele gemäß den Figuren 5 und 6 zeigen, für die im folgenden lediglich die Unterschiede zum Ausführungsbeispiel gemäß Figur 1 erläutert werden.

Beim Ausführungsbeispiel gemäß Figur 5 geht die Welle 44 der Wandlervorrichtung 12 nicht in die Zeigerwelle 22 über. Vielmehr sitzt auf der Welle 44 ein Zahnrad 104, das mit einem Ritzel 106 kämmt, das auf der Zeigerwelle 22 sitzt, die parallel zur Welle 44 einerseits in der Platine 18 und andererseits in einem Lagerteil 108 gelagert ist, an dem sich die Spiralfeder 24 abstützt, die mit der Zeigerwelle 22 verbunden ist. Das Zahnrad 104, das auch als Zahnsegment ausgebildet sein könnte, bildet zusammen mit dem Ritzel 106 ein Räderwerk 110, das zusammen mit der Wandlervorrichtung 12 das Übertragungswerk des Ausführungsbeispieles gemäß Figur 5 bildet. Aufgrund des Räderwerkes 110 kann eine Wandlervorrichtung 12 zur Anwendung kommen, die ein kleineres Übersetzungsverhältnis, d.h. ein kleineres Verhältnis von Drehung des Ausgangselementes 46 zur Verschiebung des Eingangselementes 16, hat.

Das Ausführungsbeispiel gemäß Figur 6 unterscheidet sich vom Ausführungsbeispiel gemäß Figur 1 dadurch, daß zwischen die Membrankapsel 4 und die Wandlervorrichtung 12 als weiteres Element des Übertragungswerks ein einarmiger Hebel 112 geschaltet ist. Der einarmige Hebel 112 ist am Ende seines längeren Hebelarmes schwenkbar am Eingangselement 16 der Wandlervorrichtung 12 angelenkt und ist mit seinem kürzeren Hebelarm gelenkig mit der oberen Metallmembran 6 der Membrankapsel 4 verbunden. Gelagert ist der Hebel 112 mit seinem in Figur 6 rechten Ende an einem Ansatz 104 der Platine 18. An seinen Verbindungsstellen mit der Wandlervorrichtung 12 bzw. der Membrankapsel 4 kann der Hebel 112 jeweils sowohl Zugals auch Druckkräfte übertragen.

Beim Ausführungsbeispiel gemäß Figur 6 erfolgt vor Beaufschlagung der Wandlervorrichtung 12 eine Verstärkung der Auslenkung der Membran 4 im Verhältnis der Hebelarme des Hebels 112.

Sowohl bei dem Ausführungsbeispiel gemäß Figur 5 als auch bei dem Ausführungsbeispiel gemäß Figur 6 kann die Wandlervorrichtung 12 eine der unter Bezugnahme auf die Figuren 2 bis 4 beschriebenen Ausbildungen (oder auch eine davon abweichende Ausbildung) haben.

Die Erfindung ist nicht auf die vorstehend beschriebenen Ausführungsbeispiele beschränkt.

P a t e n t a n s p r ü c h e

1. Barometer mit einer Membrankapsel, einer drehbar gelagerten Zeigerwelle und einem Übertragungswerk, das einerseits mit der Zeigerwelle und andererseits mit der Membrankapsel derart gekoppelt ist, daß es die Bewegungen der Membrankapsel zur Zeigerwelle überträgt,
dadurch    g e k e n n z e i c h n e t,
daß das Übertragungswerk eine Wandlervorrichtung (12) aufweist, die ein drehbar gelagertes Ausgangselement (46), das in zumindest einer Richtung gegen axiale Verschiebung gesichert ist, und ein in Richtung der Drehachse des Ausgangselementes verschiebbar geführtes Eingangselement (16) umfaßt, das gegen Drehung um die Drehachse des Ausgangselementes gesichert ist, und die eine translatorische Bewegung des Eingangselementes in eine rotatorische Bewegung des Ausgangselementes umwandelt, wobei die Membrankapsel (4) das Eingangselement verschiebt und das Ausgangselement die Zeigerwelle (22) antreibt.

2. Barometer nach Anspruch 1,
dadurch g e k e n n z e i c h n e t ,
daß zwischen der Membrankapsel (4) und der Wandlervorrichtung (12) ein Hebel (112) angeordnet ist, an dessen kürzerem Hebelarm die Membrankapsel angreift und dessen längerer
Hebelarm am Eingangselement (16) angreift.

3. Barometer nach Anspruch 1 oder 2,
dadurch g e k e n n z e i c h n e t ,
daß zwischen dem Ausgangselement (46) und der Zeigerwelle
(22) ein Räderwerk (110) aus miteinander kämmenden Rädern
(104, 106) angeordnet ist, das die Drehung des Ausgangselementes zur Zeigerwelle überträgt.

4. Barometer nach Anspruch 1 oder 2,
dadurch g e k e n n z e i c h n e t ,
daß zwischen dem Ausgangselement (46) und der Zeigerwelle
(22) ein biegsames Zugelement angeordnet ist, das an seinem
einen Ende um die Zeigerwelle gewickelt ist und an seinem
anderen Ende um eine Scheibe am Ausgangselement gelegt ist.

5. Barometer nach Anspruch 1,
dadurch g e k e n n z e i c h n e t ,
daß das Übertragungswerk ausschließlich aus der Wandlervorrichtung (12) besteht, wobei die Zeigerwelle (22) koaxial
zum Ausgangselement (46) angeordnet ist und wobei das Eingangselement (16) unmittelbar an der Membrankapsel (4) abgestützt ist.

6. Barometer nach Anspruch 5,
dadurch g e k e n n z e i c h n e t ,
daß die Zeigerwelle (22) und das Ausgangselement (46) einstückig ausgebildet sind.

7. Barometer nach einem der Ansprüche 1 bis 6,

dadurch   g e k e n n z e i c h n e t ,
daß die Wandlervorrichtung (12) zumindest einen Stab (54,
56) umfaßt, der an seinem einen Ende mit dem Ausgangselement
(46) und an seinem anderen Ende mit dem Eingangselement (16)
jeweils mittels eines Kugelgelenkes (74, 76) verbunden ist,
daß die beiden Kugelgelenke Abstand von der Drehachse des
Ausgangselements haben, daß die Längsachse des Stabes bezüglich einer zur Drehachse parallelen Lage schwach geneigt
ist und daß das Ausgangselement gegen axiale Verschiebung in
Richtung weg vom Eingangselement gesichert ist.

8. Barometer nach Anspruch 7,
   g e k e n n z e i c h n e t
   durch eine Führung (78) für jeden Stab (54, 56), die den
   Stab daran hindert, die zur Drehachse parallele Lage einzunehmen.

9. Barometer nach Anspruch 7 oder 8,
   g e k e n n z e i c h n e t
   durch eine Druckfeder, die sich an einander zugewandten
   Flächen des Eingangselementes (16) und des Ausgangselementes (46) abstützt.

10. Barometer nach einem der Ansprüche 1 bis 6,
    dadurch   g e k e n n z e i c h n e t ,
    daß die Wandlervorrichtung (12) einen verdrillten Strang
    (94) aus einem elastischen Werkstoff umfaßt, der an seinem
    einen Ende drehfest mit dem Ausgangselement (46) und an
    seinem anderen Ende drehfest mit dem Eingangselement (16)
    verbunden ist, daß der Strang im wesentlichen entlang der
    Drehachse des Ausgangselementes verläuft, daß das Ausgangselement gegen axiale Verschiebung in Richtung zum Eingangselement gesichert ist, daß am Ausgangselement ein Federmoment angreift, das die Verdrillung des Stranges aufrechtzuhalten versucht, und daß das Eingangselement zug- und druckfest mit der Membrankapsel (4) bzw. mit dem zwischen die Membrankapsel und das Eingangselement geschalteten Element verbunden ist.

11. Barometer nach Anspruch 10,
dadurch  g e k e n n z e i c h n e t ,
daß der Strang (94) aus gummielastischen Fäden besteht.

12. Barometer nach Anspruch 10,
dadurch  g e k e n n z e i c h n e t ,
daß der Strang (94) aus Metalldrähten besteht.

13. Barometer nach einem der Ansprüche 1 bis 6,
dadurch  g e k e n n z e i c h n e t ,
daß die Wandlervorrichtung (12) ein mit schraubenlinienförmigen Führungsflächen (100) versehenes Führungselement (102) und ein Eingriffselement (96) umfaßt, das mit den Führungsflächen in Eingriff stehende Eingriffsflächen (98) aufweist, daß die Mittelachse der schraubenlinienförmigen Führungsflächen im wesentlichen mit der Drehachse des Ausgangselementes (46) zusammenfällt, daß das Führungselement und das Eingriffselement dreh- und schiebefest mit dem Eingangselement (16) bzw. dem Ausgangselement (46) verbunden sind, daß das Ausgangselement in beiden Richtungen gegen axiale Verschiebung gesichert ist und daß das Eingangselement zug- und druckfest mit der Membrankapsel (4) bzw. mit dem zwischen die Membrankapsel und das Eingangselement geschalteten Element verbunden ist.

14. Barometer nach Anspruch 13,
dadurch  g e k e n n z e i c h n e t ,
daß das Führungselement und das Eingriffselement als Gewindestift (102) mit einem Außengewinde bzw. als Gewindehülse (96) mit einem Innengewinde ausgebildet sind, wobei die beiden Gewinde in Eingriff miteinander stehen.

15. Barometer nach Anspruch 14,

dadurch g e k e n n z e i c h n e t ,

daß das Außengewinde und das Innengewinde Trapezgewinde sind.

16. Barometer nach einem der Ansprüche 1 bis 15,

g e k e n n z e i c h n e t

durch ein zylindrisches,napfförmiges Gehäuse (14) für die Wandlervorrichtung (12), wobei das Ausgangselement (46) im Boden (18) des Gehäuses drehbar gelagert ist und wobei das Eingangselement (16) eine im wesentlichen zylindrische Form hat und gleitend verschiebbar in das offene Ende des Gehäuses eingesetzt ist.

FIG.2    FIG.3

FIG.1

1/2

0078977

A

FIG.5

FIG.6

FIG.4

Europäisches
Patentamt

EUROPÄISCHER RECHERCHENBERICHT

**0078977**
Nummer der Anmeldung

EP    82 10 9904

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 L    7/12 |
| X | DE-B-  216 315  (CHAR-SHIN LEE et al.) <br> * Ansprüche 1-3; Figuren 1, 3 * | 1,4,5 | |
| | --- | | |
| X | DE-B-2 328 937  (SPRINGFIELD INSTRUMENT CO.) <br> * Figur 6; Spalte 2, Zeilen 57-64 * | 1,2 | |
| | --- | | |
| A | US-A-4 010 646  (D.P. MUHS) <br> * Figur 1; Spalte 3, Zeilen 42-48 * | 1,3 | |
| | ----- | | |

RECHERCHIERTE SACHGEBIETE (Int. Cl. ³)

G 01 L    7/08
G 01 L    7/10

Der vorliegende Recherchenbericht wurde für alle Patentansprüche erstellt.

| Recherchenort <br> BERLIN | Abschlußdatum der Recherche <br> 17-01-1983 | Prüfer <br> KOEHN G |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82